# EUROPEAN PATENT SPECIFICATION

(11) **EP 0 906 351 B1**
(45) Date of publication and mention of the grant of the patent: **04.09.2002**
(21) Application number: 97928613.5
(22) Date of filing: 18.06.1997
(51) Int. Cl.: C08F 283/01, C09D 167/06, C08F 299/04

(54) **PHOTOPOLYMERIZABLE POLYESTER COMPOSITION AND PROCESS FOR THE PRODUCTION THEREOF**
PHOTOPOLYMERISIERBARE POLYESTERZUSAMMENSETZUNG UND VERFAHREN ZU IHRER HERSTELLUNG
COMPOSITION DE POLYESTER PHOTOPOLYMERISABLE ET SON PROCEDE DE PREPARATION

(30) Priority: 20.06.1996 SE 9602466
(43) Date of publication of application: 07.04.1999
(73) Proprietor: Eastman Chemical Sweden AB, 431 21 Mölndal (SE)
(72) Inventor: JOHANSSON, Mikael, S-431 42 Mölndal (SE); BAKKELUNN, Terje, S-438 32 Landvetter (SE); JÖNSSON, Erik, Sonny, S-113 39 Stockholm (SE)
(74) Representative: Romare, Laila Anette
(86) International application number: SE9701087
(87) International publication number: WO97048744

(56) References cited:
- EP-A- 0 322 808
- EP-A- 0 574 776
- US-A- 4 921 883

## Description

### TECHNICAL FIELD:

The invention pertains to a photopolymerizable polyester composition comprising an ethylenically unsaturated polyester and a comonomer. The invention further relates to a lacquer or paint comprising the polyester composition and a method for its production.

### BACKGROUND OF THE INVENTION:

When lacquering surfaces of materials, for instance in the furniture industry, the use of paint and lacquer comprising polymer compositions which may be cured by radiating the surface with ultraviolet light, so called UV-light, presents major advantages. Such polymer compositions thereby act as a binder and permit the paint or lacquer to be coated, sprayed, or applied in some other manner to the surface of the material. Subsequent radiation treatment of the surface with UV-light produces a hard coating with good flexibility, wear strength, and good resistance to chemicals. By UV-light is thereby meant light in a wave length range of 200-500 nm. The UV-light which is commonly used for curing paints and lacquers is usually within the wave length range of 200-400 nm.

Curing by ultraviolet light implies very rapid curing processes and further makes it possible to use paint- and lacquer compositions which are free from organic solvents. Accordingly, considerable advantages are achieved with regard to the working environment, since handling of solvents is avoided. Additionally, emissions of environmentally harmful components to the surroundings may be minimised by keeping the concentration of organic compounds low. Further, the amount of lacquer or paint which is required in order to achieve a coating with good strength may often be reduced, as compared to lacquer and paint based on thermally curing binder compositions.

The quality of the treated surface is to a high degree dependent on the molecular weight of the binder, such that binders with a high molecular weight and thereby also a high viscosity, produce high quality surfaces. For this reason, thermosetting binder compositions are usually diluted with organic solvents in order to make it possible to apply them to a surface. With a high quality of a treated material surface is meant that the surface meets the requirements for the above mentioned quality properties, namely hardness, flexibility, wear strength, adhesion and chemical resistance.

Previously known, commonly available binder compositions for use in photo polymerisation are based on different acrylic oligomers and/or -monomers. Paint- and lacquer systems containing such binder compositions have high reactivity and produce treated material surfaces with good quality properties. The freedom to choose the method of application is, however, heavily restricted by considerations which have to be made regarding environmental and health hazards in connection with such systems. In addition, such paints and lacquers require the use of special protective equipment in order to reduce the risks associated with the application.

Since those acrylate based lacquers and paints which show the highest reactivity and provide the best quality for the treated material surface are particularly troublesome from an environmental and health point of view, there exists a great need of finding an alternative system which retains the good qualities but have less hazardous properties.

A further, previously known binder composition consists of a system comprising a combination of unsaturated polyester and styrene where the styrene monomer reacts with the polyester in a curing process. Such a system exhibits good reactivity and the treated material surface which is obtained is of high quality. A problem is, however, that the styrene monomer is volatile. Accordingly, and as in the case with the acrylate based lacquers and paints, the major disadvantage with a styrene containing system is the risks and problems regarding health and environment connected therewith.

In order to avoid using styrene or acrylates, the polymerisation of unsaturated polyester with other reactive monomers has been proposed. Some examples of such polymerisation are, for instance, given in EP 0 322 808, US 5 340 653, US 5 334 456 and US 5 334 455. A great disadvantage and a limitation with these types of binders is, however, that they show comparatively low reactivity. In particular, the reactivity in air is insufficient. Furthermore, it is a problem with these known systems that a surface which has been treated with a paint or lacquer remains tacky even after curing at normal radiation doses if the treatment has been carried out in air. This is due to the fact that oxygen in the air inhibits the curing reaction.

In an article with the title "Some practical aspects of Maleate/Vinyl ether systems in wood coating application" published in RadCureLetter no. 3, 1996, binder systems based on maleate/vinyl ether-combinations are described. According to the article, such systems exhibit a lower reactivity than acrylate based binder systems. This is said to be due to the low reactivity of the maleate/vinyl systems, since the maleic acid derivative and the vinyl ether form a charge-transfer-complex before the polymerisation takes place. In this manner, the reactivity of the system is strongly dependent on the relation between the concentrations maleate:vinyl ether. It is said that the reactivity may be increased by increasing the radiation dose when curing the system. The terminal group of the polyester is only said to have an effect on parameters such as viscosity and Tg. There is no suggestion whatsoever that the choice of the terminal group affects the reactivity of the system.

Accordingly, there exists a need for a reactive photopolymerisable binder system for paints and lacquers, having good properties from an environmental, a health, and a quality point of view.

### SUMMARY OF THE INVENTION:

With the present invention a polyester composition of the initially mentioned kind has been achieved, which polyester composition is well suited for use as a binder in different paint and lacquer compositions. With the polyester composition in accordance with the invention, the problems associated with previously known binders for paint and lacquers have been considerably reduced.

Accordingly, there is provided a photopolymerisable polyester composition comprising an ethylenically unsaturated polyester and a co-monomer,
characterized in that the polyester has a molecular weight within the range of 300 g/mol to 50000 g/mol, that the co-monomer is an alkenyl ether, an alkenyl ester, an n-alkenyl-amine or an n-alkenyl-amide, or a mixture of two or more of these monomer types, that the polyester and/or the co-monomer is terminated with at least one bulky and/or hydrogen donating, monofunctional alcohol, a bulky alcohol being an alcohol exhibiting structural elements having branched aliphatic and/or substituted aromatic groups, wherein said structural elements are bonded to the OH-group in the alcohol, and that the molar ratio between the degree of unsaturation of the unsaturated polyester and the degree of unsaturation of the co-monomer is 0.7-1.3, preferably 0.9-1.1.

### DETAILED DESCRIPTION OF THE INVENTION:

By terminating unsaturated polyester molecular chains with bulky and/or hydrogen donating, mono-functional alcohols, it has surprisingly been shown that the reactivity in a binder system containing such polyester molecular chains can be considerably increased. In this context, the term bulkiness is taken to mean that the alcohol exhibits structural elements having branched aliphatic and/or substituted aromatic groups, wherein the structural elements are bonded to the OH-group in the alcohol. The two terminal alcohol groups of the polyester molecular chain may be either identical, or different.

Some examples of useful aromatic terminal groups are:
benzyl alcohol, and groups having the general structural formula

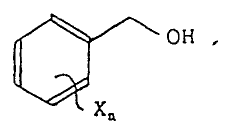

Where X may be alkyl, aryl, alkoxy, aryloxy, and corresponding thio-groups. X is preferably an electron donor.

Further, aliphatic terminal alcohols may be used having the general formula:

R₅ - O - R₄ - OH

where
R₄ and R₅ are substituents which define the number of (CH₂)ₙ-groups, and the degree and type of branching of the structure. The number n = 1-12, preferably 1-3.

Some examples of suitable aliphatic branched alcohols are: 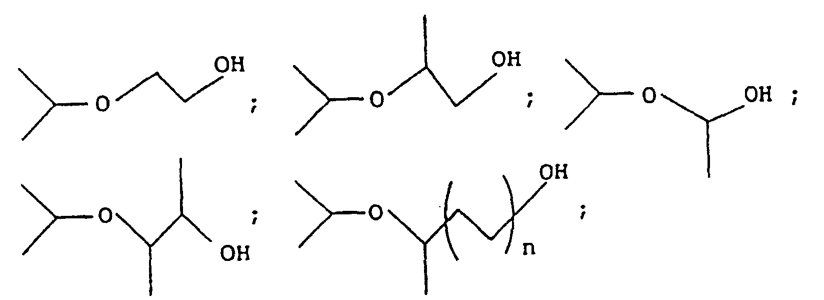 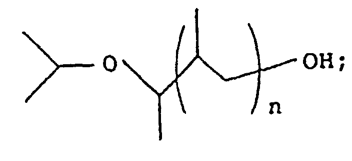 etc.

In addition the R₄ - substituent may be methyl, ethyl, n-propyl, butyl, etc.

Some other useful aliphatic alcohols are heterocyclic or cyclo-aliphatic alcohols such as: 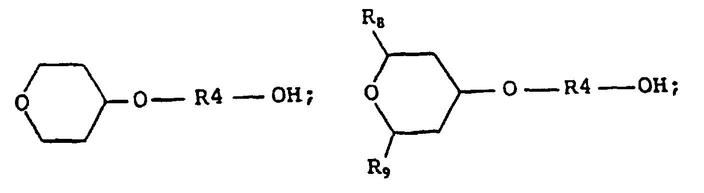 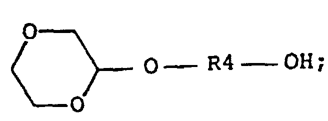 etc.

where R₄ = (CH₂)ₙ , and n = 1-12, preferably 1-3; R₈ , R₉ = alkyl substituents, preferably methyl, ethyl, propyl or butyl.

Cyclic alcohols having 5-, 4-, and 7- atom rings may also be used. An example of an alcohol with a 5-atom ring is:

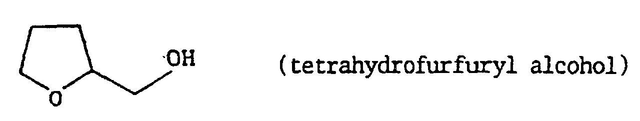

Additionally, alkyl substituted tetrahydrofurfuryl alcohols, and the corresponding may also be used.

The term hydrogen donor refers to structural elements bonded to the OH-group and having abstractable hydrogen atoms. Hydrogen atoms showing particularly high reactivity are so called α-hydrogen atoms in electronegative hetero atoms such as -O-, -S-, -N-, -P-, amides, carbamates, or corresponding active functional organic groups.

All the above mentioned bulky alcohols are hydrogen donors. However, bulky alcohols having all abstractable hydrogen atoms blocked may be useful. Some examples of bulky alcohols which are not hydrogen donors are: 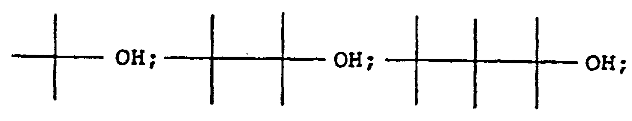 etc., and 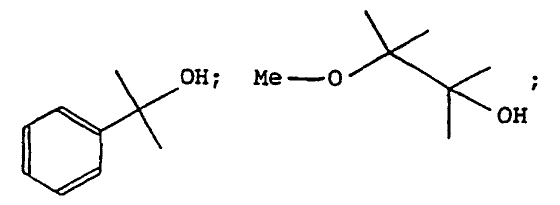 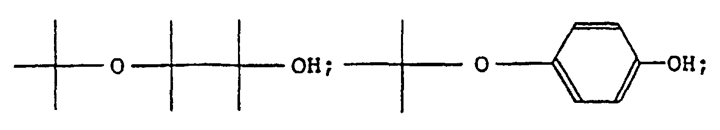 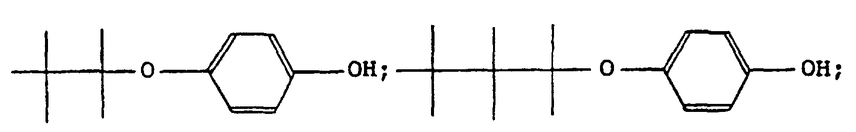 etc., and 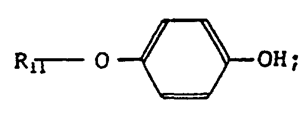 where R₁₁ is a bulky substituent and 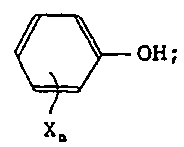 where Xₙ is a bulky substituent.

Other similar compunds may also be used.

The advantageous effect of bulky, hydrogen donating, monofunctional alcohols is apparent both in systems with unsaturated polyester and mono- and multi-functional alkenyl ethers, as well as in systems with unsaturated polyester and mono- and multi-functional alkenyl esters.

An alkenyl ether is taken to be a compound having the general structure:

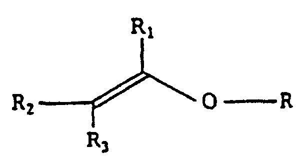

An alkenyl ester has the general structure: 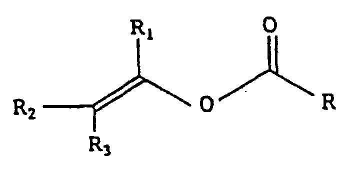 where R₁, R₂, and R₃ = H, or a C₁ - C₁₈ alkyl-group and R is the backbone of the ether or ester.

Further, it has been shown that binder systems with unsaturated polyester and systems with n-alkenylamines or n-alkenylamides also show increased reactivity as compared to conventional binders based on unsaturated polyester.

The co-monomer or -oligomer which is used may either be mixed with the unsaturated polyester, or be chemically incorporated therein.

It has also been shown to be possible to further increase the reactivity for a binder system in accordance with the invention by performing the synthesis of the unsaturated polyester under conditions that will simultaneously produce fractions of oligomeric type, comprising the previously mentioned terminal alcohol.

An additional advantage with a polyester composition in accordance with the invention is that it exhibits very good reactivity in air. A binder system consisting of the polyester composition in accordance with the invention is hence so reactive that the problem with oxygen inhibition and tacky, incompletely hardened material surfaces has been substantially removed.

Binder compositions comprising unsaturated polyesters may be used both in systems without a solvent and in water emulsion systems. Accordingly, emulgated unsaturated polyesters may be produced and may be successfully used in combination with alkenyl ethers, alkenyl esters, n-alkenyl amines, or n-alkenyl amides for spray coating of three-dimensionally shaped articles.

There are several different reasons why the use of a binder system emulgated in water is advantageous. For one thing, it means that the molecular weight of the binder and hence its viscosity is reduced to being of minor importance. It also implies that even binders having a high molecular weight and viscosity may be used and may, with good results, be applied using conventional methods such as, for instance, spraying. The reason why it is desirable to use binders with a high molecular weight is that such binders generally produce a coated material surface having superior end properties when compared to binders having a low molecular weight.

When treating three-dimensional surfaces, spraying is the application method providing the best results. Since good surface qualities are evidently sought after even for three-dimensionally shaped objects, it is naturally a major advantage to be able to spray paints and lacquers comprising binders having a high molecular weight.

By means of the invention, it is thus possible to obtain a binder system based on an unsaturated polyester and a co-monomer, wherein the system exhibits an increased reactivity when compared to previously known systems based on unsaturated polyester. The increased reactivity will appear both if the co-monomer is in the form of a separate component in the system and if it is chemically incorporated into the polyester.

The reactivity achieved for a system in accordance with the invention is on the same level as the reactivity obtained in the earlier known acrylate systems. In addition, the environmental and health problems associated with the use of acrylates are reduced to a considerable degree with the system in accordance with the invention.

Commonly used curing equipment, for instance in the furniture industry, is dimensioned for UV-doses between 300-500 mJ/cm². Since the radiation intensity of the UV-lamps which are being used diminishes after a while, this will in practice mean that a finished lacquer or paint containing a binder in accordance with the invention should be curable at radiation doses below 300 mJ/cm². In this context, a lacquer or paint is regarded to exhibit sufficient reactivity if the lacquer surface which is obtained fulfils predetermined demands on qualities such as hardness, flexibility, wear strength, adhesion and chemical resistance. In practice, however, it is impossible to reach a rate of conversion or a curing degree with regard to unsaturated sites in the finished lacquer or paint which is 100%. The necessary degree to which the curing reaction has to be carried out in order to achieve satisfactory properties in a coated material surface depends on the composition of the binder system which is used. Naturally, the demands which are put on the coated material surface vary depending on the intended use for the surface.

A binder composition in accordance with the invention is initially a liquid and is cured after having been applied to a material surface, the curing being effected by radiation with ultra violet light. The application of a lacquer, or a paint containing the binder composition to a material surface may thereby be carried out using any suitable known technique. Some examples of such known techniques are spraying, roller coating , curtain coating or doctor blade coating.

The unsaturated polyester in the binder composition is crosslinked in the curing process by having its unsaturated sites react with unsaturated sites in the co-monomer comprised in the binder composition. In order to accomplish curing, it is necessary that the binder composition in addition to the polyester and the co-monomer, also contains a photo-initiator. Some suitable photo-initiators are, for example, isobutyl benzoine ether, mixtures of butyl isomers of butyl benzoine ether, alfa,alfa-diethoxy acetophenone and alfa,alfa-dimethoxy-alfa-phenyl acetophenone. Some further examples of useful photo-initiators are to be found in US A-4,017,652.

The ethylenically unsaturated polyester may be an unsaturated polyester polymer, an unsaturated polyester oligomer or a mixture of those. The production of unsaturated polyesters is a well known technique and will not be described here.

Useful unsaturated polyester are usually esters of ethylenically unsaturated carboxylic acids and organic polyalcohols, also called organic polyols. Usually the starting materials are a carboxylic acid having an acid functionality of at least two, i.e. a di-carboxylic acid or its anhydride. Some examples of such unsaturated di-carboxylic acids and anhydrides are maleic acid, maleic acid anhydride, fumaric acid and ithaconic acid.

Further, in a binder composition in accordance with the invention it is possible to use unsaturated polyesters wherein a saturated poly-carboxylic acid constitutes one part of the carboxylic acid component. Some examples of saturated poly-carboxylic acid which may be used are phthalic acid, isophthalic acid, terephthalic acid, trimellitic acid, tetrahydrophthalic acid, hexahydrophthalic acid, tetrachlorophthalic acid, adipic acid, azelaic acid, sebacic acid, succinic adid, glutaric acid, malonic acid, pimelic acid, suberic acid, 2,2-dimethylsuccinic acid, 3,3-dimethylglutaric acid and 2,2-dimethylglutaric acid. Where appropriate, anhydrides of the mentioned poly-carboxylic acids may of course also be used.

Mono-functional carboxylic acids, such as benzoic acid and paratertiary butyl benzoic acid, etc., may be used.

Some examples of organic polyols which are suitable for the production of an unsaturated polyester comprise ethylene glycol, diethylene glycol, triethylene glycol, propylene glycol, dipropylene glycol, butylene glycol, glycerol, trimethylolpropane, pentaerythritol, sorbitol, 1,6-hexanediol, 1,4-cyclohexanediol, 1,4-cyclohexanedimethanol, 1,2-bis(hydroxyethyl)cyclohexane and 2,2-dimethyl-3-hydroxypropyl-2,2-dimethyl-3-hydroxypropionate. Preferred organic polyols are the diols. A particularly preferred polyol is diethylene glycol, since it is readily available and comparatively inexpensive. Organic polyols having a hydroxylic functionality greater than 2 can be used in the preparation of the unsaturated polyester. Preferably, however, the major part, if not all of the unsaturated polyester, consists of linear polyester molecules. For this reason, the use of diols is preferred.

The molecular weight of the unsaturated polyesters which are used in the binder composition in accordance with the invention is of from 300 g/mol all the way up to 50,000 g/mol.

When the co-monomer in the binder composition consists of a alkenyl ether, alkenyl ether monomers having 1-4 alkenyl ether groups per molecule of the alkenyl ether component are used. It has surprisingly been shown that terminal alcohols in accordance with the invention make it possible to obtain good mechanical properties and, in addition, a high reactivity even at a mean functionality of the alkenyl ether components being considerably lower than 2. As has been previously mentioned, the alkenyl ether component may exist in the form of a separate component which is mixed with the unsaturated polyester. Alternatively, the alkenyl ether may be chemically incorporated in the unsaturated polyester.

In the polyester composition, the relative amounts of the unsaturated polyester and the alkenyl ether are such that the relation between the number of carbon-carbon-double bonds, i.e. the number of unsaturations in the unsaturated polyester and the number of carbon-carbon-double bonds, i.e. the number of unsaturations in the alkenyl ether is between 0.7-1.3, and preferably between 0.9-1.1.

Those alkenyl ethers which may be utilised separately in a mixture with unsaturated polyester are, for instance, ethylvinyl ether, propylvinyl ether, n-butylvinyl ether, iso-butylvinyl ether, tert-butylvinyl, ether, hydroxybutylvinyl ether, tert-amylvinyl ether, 1,4-cyclohexane-dimethanol-divinyl ether, n-dodecylvinyl ether, cyclohexane-dimethanol-monovinyl ether, cyclohexylvinyl ether, ethyleneglycol-monovinyl ether, diethyleneglycol-divinyl ether, butanediol-divinyl ether, 2-ethylhexyl-vinyl ether, dipropyleneglycol-divinyl ether, tripropyleneglycol-divinyl ether, 1,6-hexanediol-divinyl ether, n-octadecylvinyl ether, ethyleneglycol-butylvinyl ether, triethyleneglycol-divinyl ether, triethyleneglycol-methylvinyl ether, ethyleneglycol-divinyl ether, diethyleneglycol-monovinyl ether, hexanediol-monovinyl ether, and tetraethyleneglycol-divinyl ether.

Other suitable alkenyl ethers are propenyl ethers, whereby all existing mono-, di-, and tri-propenyl ethers having the above mentioned basic structures may be used, as well as, where appropriate, cis-, trans-, and iso- forms.

Alkenyl ethers existing as chemically incorporated groups which are bonded to the molecular chain of the unsaturated polyester may be obtained from the previously recited saturated carboxylic acids and unsaturated carboxylic acid anhydrides, and the earlier mentioned organic polyols. One way of linking the alkenyl ether to the unsaturated polyester is by using an organic diisocyanate.

It is further possible to achieve good results using an amine as starting material which is subsequently derivatised in order to obtain the corresponding n-alkenyl-amine. Some suitable amines are, for instance, toluene-2,4-amine, toluene-2,6-amine and mixtures thereof; or diphenylmethane-4,4'-aminediphenyl-methane-2,4'-amine and mixtures thereof; or paraphenylene-amine, biphenyl-amine, 3,3'-dimethyl-4,4'-diphenylene-amine, tetramethylene-1,4-amine, hexamethylene-1,6-amine,2,2,4-trimethylhexane-1,6-amine, lysin-methyl-ester-amine, bis(amino-ethyl)fumarate, isophorone-amine, ethylene-amine, dodecane-1,12-amine, cyclobutane-1,3-amine, cyclo-hexane-1,3-amine, cyclohexane-1,4-amine and mixtures thereof; methyl-cyclohexyl-amine hexahydro-toluene-2,4-amine, hexahydro-toluene-2,6-amine, and mixtures thereof; hexahydrophenylene-1,3-amine,hexahydrophenylene-1,4-amine, and mixtures thereof; perhydrodiphenylmethane-2,4'-amine, perhydrodiphenylmethane-4,4'-amine and mixtures thereof. The resulting unsaturated polyester comprises urethane groups.

Similarly, the starting material may be an amide which has been derivatised to an n-alkenyl amide. Suitable amides are those amides corresponding to the previously mentioned amines.

The intended n-alkenyl-amines may be mono-functional, di-functional, or multi-functional. Aliphatic compounds, as well as their cyclic forms, may be used. Mono-functional n-alkenyl-amines have the general structural formula:

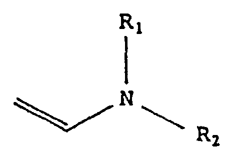

Where R₁, R₂ = H, alkyl, or aryl.

Di-functional n-alkenyl-amines have the general structural formula: 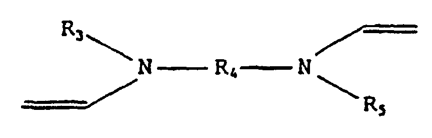 where R₃, R₅ = H, alkyl, or aryl.

Multi-functional n-alkenyl-amines have the general structural formula: 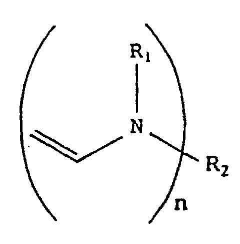 wherein R₁, R₂ = H, alkyl, or aryl and 1 < n < 7- R₂ has a greater mean functionality with respect to amino groups in the pre-oligomeric chain than the corresponding mono-unctional n-alkenyl amine.

The cyclic n-alkenyl-amines have the general structural formula: 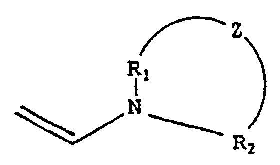 wherein R₁, R₂ = alkyl, or aryl and Z defines the ring size and may comprise one or more hetero atoms.

The n-alkenyl-amides which may be utilised have structures corresponding to that of the n-alkenyl-amines. Accordingly, there exist mono-functional, di-functional and multi-functional n-alkenyl-amides, and their corresponding closed ring forms.

The mono-functional n-alkenyl-amides have the general structural formula: 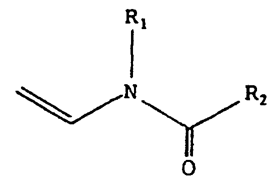 wherein R₁ = R₂ = H, or wherein R₁ =H, R₂ = alkyl, or aryl.

The di-functional n-alkenyl-amides have the general structural formula: 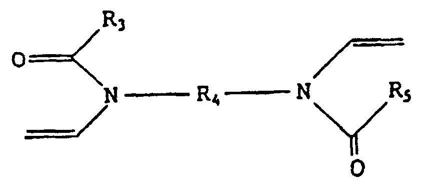 or 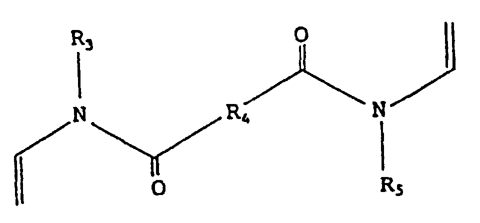 wherein R₃ = R₅ = H, alkyl, or aryl.

The multi-functional n-alkenyl-amides have the general structural formula: 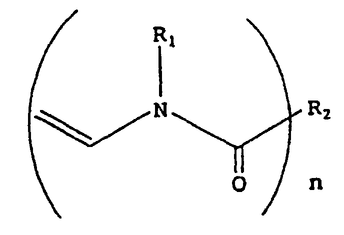 wherein R₁ = H, alkyl, or aryl; R₂ = alkyl, or aryl and 1 < n < 7.

The cyclic n-alkenyl-amides have the general structural formula: 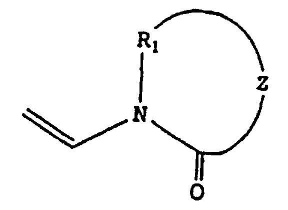 wherein R₁ = alkyl, or aryl and Z defines the ring size and indicates the possible existence of hetero atoms.

Apart from the given examples of amines and amides, the corresponding cis-, trans-, and iso-forms of the propenyl-compounds may also be used.

Those alkenyl esters which are suitable as co-monomers are, for example, vinyl esters such as vinyl-formamate, vinylacetate, vinyl-propionate, vinyl-butyrate, vinyl-caproate, vinyl-caprylate, vinyl-caprate, vinyl-laurate, vinyl-myristate, vinyl-palmitate, vinyl-stearate, vinyl-chloroacetate, vinyl-adipate, vinyl-acrylate, vinyl-methacrylate, vinylchrotonate, vinyl-sorbate, vinyl-pivalate, vinyl-bensoate, vinyl-cinnamate, vinyl-p-tert-butylbensoate.

In addition to the unsaturated polyester and the co-monomer, the binder composition may comprise other ethylenically unsaturated monomers or oligomers. Some examples are vinyl-monomers such as vinyl acetate, styrene, vinyl toluene, divinyl benzene, methylvinyl ether, ethylvinyl ether, and butyl-vinyl ether; acrylic and methacrylic esters such as methyl (meth)acrylate, ethyl (meth)acrylate, isopropyl (meth)acrylate, n-butyl (meth)acrylate, isobutyl (meth)acrylate, 2-ethylhexyl (meth)acrylate, 2-hydroxyethyl (meth)acrylate, glycidyl (meth)acrylate, ethylene glycol di(meth)acrylate, diethylene glycol di(meth)acrylate, tetraethylene glycol di(meth)acrylate, glycerol di(meth)acrylate, glycerol tri(meth)acrylate, 1,3-propylene glycol di(meth)acrylate, dipropylene glycol di(meth)acrylate, 1,4-butanediol di(meth)acrylate, 1,2,4-butanetriol tri(meth)acrylate, 1,6-hexanediol di(meth)acrylate, 1,4-cyclohexanediol di(meth)acrylate, 1,4-benzenediol di(meth)acrylate, pentaerythritol tetra(meth)acrylate, 1,5-pentanediol di(meth)acrylate, trimethylolpropane di(meth)acrylate, trimethylolpropane tri(meth)acrylate, 2,2-dimethyl-3-hydroxypropyl-2,2-dimethyl-3-hydroxypropionate, isobornyl (meth)acrylate, and tetrahydrofurfuryl (meth)acrylate; (meth)acrylates derived from aromatic glycidyl ethers such as bisphenol-A-diglycidyl ether and aliphatic glycidyl ethers such as butanediol diclycidyl ether, specific examples of which include 1,4-butanediol diglycidylether di(meth)acrylate, bisphenol-A-diglycidylether di(meth)acrylate and neopentylglycol diglycidylether di(meth)acrylate; and acrylic or methacrylic amides such as (meth)acrylamide, diacetone (meth)acrylamide, N(beta-hydroxyethyl) (meth)acrylamide, N,N-bis(beta-hydroxyethyl) (meth)acrylamide, methylene bis(meth)acrylamide, 1,6-hexamethylene bis(meth)acrylamide, diethylenetriamine tris(meth)acrylamide, bis(gamma-(meth)acrylamidepropoxy) ethane and beta-(meth)acrylamide ethylacrylate.

### DESCRIPTION OF EXAMPLES:

The invention will in the following be described by means of a number of examples which are intended to more closely illustrate the invention.

In the examples:
Cardura E10 is a commercially available epoxy ester having the chemical formula 2,2-dimethyl glycidyl propionate;
Esacyre KIP 100F is a commercially available photo initiator sold by Fratelli & Lamberti S.p.A., Italy;
Rapicure DVE-3 is a commercially available triethylene glycol sold by International Specialty Products, USA;
DVAP i a commercially available divinylester adipate from Shinetsu Vinyl Acetate Co. Ltd, Japan;
Darocur 1173 is a commercially available photo initiator from Ciba-Geigy, Switzerland; and
Irganox B225 is a commercially available mixture of anti oxidant and phosphite from Ciba-Geigy.

### Example 1

Description of preparing a simple, UV-curing oligomer. As terminal mono-functional alcohol, the following compounds have been used: 2-ethylhexanol in Example 1a), benzyl alcohol in Example 1b) n-butanol in Example 1c), and ethyleneglycol monopropyl ether in Example 1d).

1a) A reaction vessel equipped for distillation and with a supply of inert gas is charged with 159 g (1.5 mol) diethylene glycol, 294 g (3.0 mol) maleic acid anhydride, and 0,10 g hydroquinone.

The reaction mixture is heated to 130°C and is kept at that temperature for 15 minutes. After the lapse time, 390 g (3.0 mol) 2-ethylhexanol is added. The temperature is gradually raised to 230°C. When increasing the temperature, the head temperature of the distillation column must not exceed 100°C. When 54 ml water has been removed and the acid value is less than 10 mg KOH/gm, the oligomer which has been produced is cooled to 150°C and 28.0 g (0.11 mol) Cardura E10 is added. The synthesis is terminated when the acid value is less than 2 mg KOH/g.

1b) A reaction vessel equipped for distillation and with a supply of inert gas is charged with 159 g (1.5 mol) diethylene glycol, 294 g (3.0 mol) maleic acid anhydride, and 0.10 g hydroquinone.

The reaction mixture is heated to 130°C and is kept at that temperature for 15 minutes. After the lapse time, 324 g (3.0 mol) benzyl alcohol is added. The temperature is gradually raised to 230°C. When increasing the temperature, the head temperature of the distillation column must not exceed 100°C. When 54 ml water has been removed and the acid value is less than 10 mg KOH/gm, the oligomer which has been produced is cooled to 150°C and 28.0 g (0.11 mol) Cardura E10 is added. The synthesis is terminated when the acid value is less than 2 mg KOH/g.

1c) A reaction vessel equipped for distillation and with a supply of inert gas is charged with 177.0 g (1.5 mol) 1,6-hexanediol, 294 g (3.0 mol) maleic acid anhydride, and 0.10 g hydroquinone.

The reaction mixture is heated to 130°C and is kept at that temperature for 15 minutes. After the lapse time, 222 g (3.0 mol) n-butanol is added. The temperature is gradually raised to 230°C. When increasing the temperature, the head temperature of the distillation column must not exceed 100°C. When 54 ml water has been removed and the acid value is less than 10 mg KOH/gm, the oligomer which has been produced is cooled to 150°C and 28.0 g (0.11 mol) Cardura E10 is added. The synthesis is terminated when the acid value is less than 2 mg KOH/g.

1d) A reaction vessel equipped for distillation and with a supply of inert gas is charged with 114.0 g (1.5 mol) propylene glycol, 294 g (3.0 mol) maleic acid anhydride, and 0.10 g hydroquinone.

The reaction mixture is heated to 130°C and is kept at that temperature for 15 minutes. After the lapse time, 312 g (3.0 mol) ethyleneglycol monopropyl ether is added. The temperature is gradually raised to 230°C. When increasing the temperature, the head temperature of the distillation column must not exceed 100°C. When 54 ml water has been removed and the acid value is less than 10 mg KOH/gm, the oligomer which has been produced is cooled to 150°C and 28.0 g (0.11 mol) Cardura E10 is added. The synthesis is terminated when the acid value is less than 2 mg KOH/g.

### Example 2

Description of the production of unsaturated polyester intended for UV-curing. In Examples 2a) and 2b) benzyl alcohol was used as mono-functional terminal alcohol. In Example 2c) a different charging order was used.

2a) A reaction vessel equipped for distillation and with a supply of inert gas is charged with 429.4 g (4.05 mol) diethylene glycol, 487.5 g (4.2 mol) fumaric acid, 196.1 g (1.9 mol) neopenthyl glycol, 50.0 g (0.35 mol) adipic acid, 177.4 g (1.1 mol) isophthalic acid, and 0.15 g hydroquinone.

The reaction mixture is gradually heated to 175°C. During the temperature increase, the head temperature of the distillation column must not exceed 100°C. When the acid value is 90 mg KOH/g, the formed oligomer is cooled to 130°C and 139.5 g (1.1 mol) 2-ethylhexanol is added. The reaction mixture is heated gradually to 230°C. During the temperature increase, the head temperature of the distillation column must not exceed 100°C. When the acid value is less than 20 mg KOH/g, the formed oligomer is cooled to 150°C and 135.2 g (0.54 mol) Cardura E10 is added. The synthesis is terminated when the acid value is less than 2 mg KOH/g.

2b) A reaction vessel equipped for distillation and with a supply of inert gas is charged with 429.4 g (4.05 mol) diethylene glycol, 487.5 g (4.2 mol) fumaric acid, 196.1 g (1.9 mol) neopenthyl glycol, 50.0 g (0.35 mol) adipic acid, 177.4 g (1.1 mol) isophthalic acid, and 0.15 g hydroquinone.

The reaction mixture is gradually heated to 175°C. During the temperature increase, the head temperature of the distillation column must not exceed 100°C. When the acid value is 90 mg KOH/g, the formed oligomer is cooled to 130°C and 115.9 g (1.1 mol) 2-benzyl alcohol is added. The reaction mixture is heated gradually to 230°C. During the temperature increase, the head temperature of the distillation column must not exceed 100°C. When the acid value is less than 20 mg KOH/g, the formed oligomer is cooled to 150°C and 135.2 g (0.54 mol) Cardura E10 is added. The synthesis is terminated when the acid value is less than 2 mg KOH/g.

2c) A reaction vessel equipped for distillation and with a supply of inert gas is charged with 429.4 g (4.05 mol) diethylene glycol and 177.4 g (1.1 mol) isophthalic acid.

The reaction mixture is gradually heated to 230°C. During the temperature increase, the head temperature of the distillation column must not exceed 100°C. When the acid value is less than 2 mg KOH/g, the formed oligomer is cooled to 130°C and 50.0 g (0.35 mol) adipic acid, 196.1 g (1.9 mol) neopenthyl glycol, 487.5 g (4.2 mol) fumaric acid, and 0.15 g hydroquinone are added. The reaction mixture is gradually heated to 175°C. During the temperature increase, the head temperature of the distillation column must not exceed 100°C. At an acid value corresponding to 150 mg KOH/g, the formed oligomer is cooled to 130°C and 115.9 g (1.1 mol) 2-benzyl alcohol is added. The synthesis is gradually heated to 230°C. During the temperature raise, the head temperature of the distillation column must not exceed 100°C. When the acid value is less than 20 mg KOH/g, the formed oligomer is cooled to 150°C and 135.2 g (0.54 mol) Cardura E10 is added. The synthesis is terminated when the acid value is less than 2 mg KOH/g.

### Example 3

Unsaturated polyester synthesised in accordance with Example 2b) is mixed with a PEG-based emulsifier.

3a) Unsaturated polyester is synthesised in accordance with Example 2b).

3b) A reaction vessel equipped for distillation and with a supply of inert gas is charged with 1242.3 g (0.83 mol) polyethylene glycol 1500 and 181.4 g (1.24 mol) adipic acid.

The reaction mixture is slowly heated to 215°C. When the acid value is 35 mg KOH/g, the formed oligomer is cooled to 140°C and 175.7 g (0.83 mol) trimethylol propane diallyl ether and 0.7 g Irganox B225 are added. The reaction mixture is heated to 190°C. When the acid value is less than 20 mg KOH/g, the formed oligomer is cooled to 150°C and 125 g (0.5 mol) Cardura E10 is added. The synthesis is terminated when the acid value is less than 2 mg KOH/g.

3c) A reaction vessel equipped for emulsification is charged with 90 g polyester in accordance with Example 3a) and 10 g emulsifier in accordance with Example 3b). When the mixture has been well mixed, 35 g water is slowly added during vigorous stirring. After 10 minutes, an additional 65 g water is added.

### Example 4

Reactivity and curing of Example 1, Example 2, and Example 3.

**Table 1.**

| Mixture ratios by weight for the components in the lacquer formulations in accordance with Examples 4a) - 4h). | | | | | | | | |
|---|---|---|---|---|---|---|---|---|
| | 4a | 4b | 4c | 4d | 4e | 4f | 4g | 4h |
| Polyester 1a | **72.9** | | | | | | | |
| Polyester 1b | | **71.3** | | | | | | |
| Polyester 1c | | | **67.8** | | | | | |
| Polyester 1d | | | | **68.7** | | | | |
| Polyester 2a | | | | | **77.1** | | | |
| Polyester 2b | | | | | | **76.5** | | |
| Polyester 2c | | | | | | | **76.5** | |
| Mixture 3c | | | | | | | | **39.3** |
| DVE-3 | **27.1** | **28.7** | **32.2** | **31.3** | **22.9** | **23.5** | **23.5** | **10.7** |
| Water | **-** | **-** | **-** | **-** | **-** | | | **50** |

By reactivity is meant the radiation dose required to achieve surface scratch resistance in a dry film having a thickness of 45 µm. Accordingly, the reactivity of the different lacquer formulations were:
4a) 700-800 mJ/cm²
4b) 250-300 mJ/cm²
4c) more than 1000mJ/cm²
4d) 250-300 mJ/cm²
4e) 500-600 mJ/cm²
4f) 100 mJ/cm²
4g) 200 mJ/cm²
4h) 130-160 mJ/cm²

The curing was performed using what is known as "a medium pressure mercury arc". A radiation source of this kind produces a typical mercury emission spectre. The light intensity was measured with a UVIMAP from EIT instruments. At a band speed of 10 m/min, the light intensity, measured in the area 320-400 nm, is 80-100 mW/cm².

4% photo initiator Darocur 1173, and 100 ppm inhibitor parabenzoequinone were added to the mixtures in accordance with Examples 4a) - 4g). Both were calculated on dry weight.

4% photo initiator Esacure KIP 100F and 100 ppm inhibitor parabenzoequinone were added to the mixture in accordance with Example 4h). Both were calculated on dry weight. Before the UV-curing, the water was evaporated for 10 minutes at 50°C.

The molar ratio between the unsaturation in the vinyl ether (the co-monomer) and the ethylenical unsaturation in the polyester is 1:1.

Examples 4a), 4b), 4c), and 4d) show curing results for simple oligomers. The backbone is identical in 4a) and 4b), whereas a glycol is substituted in 4c) and 4d). This difference has, however, minimal influence on the curing results. The differences in curing result can be attributed to the choice of monofunctional terminal alcohol. Benzyl alcohol (4b)) and ethylene glycol monoporopyl ether (4d)) show the best results. These findings are in accordance with the present invention and show how bulky and/or hydrogen donating monofunctional terminal alcohols affect the reactivity in a positive direction.

In Examples 4e) and 4f) there is shown the curing results for unsaturated polyesters which have been terminated with 2-ethylhexanol and benzyl alcohol, respectively. The superior curing result for the benzyl alcohol is explained by the bulkiness and hydrogen donating ability of the benzyl alcohol.

Examples 4f) and 4g) show the importance of the charging order. When compared to the mixture used in Example 4g), more oligomer containing benzyl alcohol, such as benzyl alcohol-isophthalic acid-benzyl alcohol, is formed in Example 4f). Hence, it is evident that an oligomer of a bulky and/or hydrogen donating mono-functional alcohol may affect the curing reaction in a positive way.

From Example 4h) it can be learned that the curing result for a water emulsion of the mixture in accordance with Example 4f) is satisfactory.

### Example 5

Curing of polyester in accordance with Example 2b) and in combination with a vinyl ester.

**Table 3.**

| The mixing ratios in parts per weight for the components included in the lacquer formulations in accordance with Example 5a). | |
|---|---|
| | 5a) |
| Polyester 2b | 76.5 |
| DVAP | 23.5 |

By reactivity is meant the radiation dose required to achieve surface scratch resistance in a dry film having a thickness of 45 µm. Accordingly, the reactivity for the lacquer formulation in accordance with Example 5a) was 200 mJ/cm².

The curing was performed using what is known as "a medium pressure mercury arc". A radiation source of this kind produces a typical mercury emission spectre. The light intensity was measured with a UVIMAP from EIT instruments. At a band speed of 10 m/min, the light intensity, measured in the area 320-400 nm, is 80-100 mW/cm².

4% photo initiator Darocur 1173, and 100 ppm inhibitor parabenzoquinone was added to the mixtures in accordance with Example 5a). Both were calculated on dry weight.

The molar ratio between the unsaturation in the vinyl ester (the co-monomer) and the ethylenical unsaturation in the polyester is 1:1.

The Examples which have been described in the above, shall not be considered as limiting to the invention.

By reactivity is meant the radiation dose required to achieve surface scratch resistance in a dry film having a thickness of 45 µm. Accordingly, the reactivity of the different lacquer formulations were:
7a) 500-600 mJ/cm²
7b) 150-200 mJ/cm²
7c) 200-250 mJ/cm2

The curing was performed using what is known as "a medium pressure mercury arc". A radiation source of this kind produces a typical mercury emission spectre. The light intensity was measured with a UVIMAP from EIT instruments. At a band speed of 10 m/min, the light intensity, measured in the area 320-400 nm, is 80-100 mW/cm².

4% photo initiator Darocur 1173, and 100 ppm inhibitor parabenzoquinone were added to the mixtures in accordance with Examples 7a) and 7b). Both were calculated on dry weight.

4% photo initiator Esacure KIP 100F and 100 ppm inhibitor parabenzoquinone were added to the mixture in accordance with Example 7c). Both were calculated on dry weight. Before the UV-curing, water was evaporated for 10 minutes at 50°C.

The molar ratio between the unsaturation in the vinyl ether (the co-monomer) and the ethylenical unsaturation in the polyester is 1:1.

Examples 7a) and 7b) show the curing results for a urethane modified polyester. The difference betweem 7a) which has been terminated with 2-ethylhexanol-and 7b) which has been terminated with benzyl alcohol is due to the bulkiness and hydrogen donating ability of the benzyl alcohol.

Example 7c) shows that a water emulsion of the mixture in accordance with 7b) exhibits satisfactory curing. properties.

### Example 8

Curing of polyester in accordance with Example 2b) and in combination with a vinyl ester.

**Table 3.**

| The mixing ratios in parts per weight for the components included in the lacquer formulations in accordance with Example 8a). | |
|---|---|
| | 8a) |
| Polyester 2b | 76.5 |
| DVAP | 23.5 |

By reactivity is meant the radiation dose required to achieve surface scratch resistance in a dry film having a thickness of 45 µm. Accordingly, the reactivity for the lacquer formulation in accordance with Example 8a) was 200 mJ/cm².

The curing was performed using what is known as "a medium pressure mercury arc". A radiation source of this kind produces a typical mercury emission spectre. The light intensity was measured with a UVIMAP from EIT instruments. At a band speed of 10 m/min, the light intensity, measured in the area 320-400 nm, is 80-100 mW/cm².

4% photo initiator Darocur 1173, and 100 ppm inhibitor parabenzoquinone was added to the mixtures in accordance with Example 8a). Both were calculated on dry weight.

The molar ratio between the unsaturation in the vinyl ester (the co-monomer) and the ethylenical unsaturation in the polyester is 1:1.

The Examples which have been described in the above, shall not be considered as limiting to the invention. Hence, a number of further variants and modifications are conceivable within the scope of the appended claims.

## Claims

1. A photopolymerisable polyester composition comprising an ethylenically unsaturated polyester and a co-monomer,
**characterized in that** the polyester has a molecular weight within the range of 300 g/mol to 50000 g/mol, that the co-monomer is an alkenyl ether, an alkenyl ester, an n-alkenyl-amine or an n-alkenyl-amide, or a mixture of two or more of these monomer types, that the polyester and/or the co-monomer is terminated with at least one bulky and/or hydrogen donating, monofunctional alcohol, a bulky alcohol being an alcohol exhibiting structural elements having branched aliphatic and/or substituted aromatic groups, wherein said structural elements are bonded to the OH-group in the alcohol, and that the molar ratio between the degree of unsaturation of the unsaturated polyester and the degree of unsaturation of the co-monomer is 0.7-1.3, preferably 0.9-1.1.

2. A composition according to claim 1,
**characterized in that** the co-monomer exists in a mixture with the unsaturated polyester.

3. A composition according to claim 1 or 2,
**characterized in that** at least a part of the co-monomer is chemically incorporated in the unsaturated polyester.

4. A composition according to any one of claims 1-3,
**characterized in that** the functionality of the unsaturated polyester is greater than 1, preferably greater than 1.3.

5. A composition according to any one of the preceding claims, **characterized in that** the functionality of the co-monomer is between 1 and 4.

6. A composition according to any one of the preceding claims, **characterized in that** the bulky, hydrogen donating, monofunctional alcohol is benzyl alcohol.

7. A composition according to any one of the preceding claims, **characterized in that** it further contains a reactive emulsifier.

8. A composition according to claim 7,
**characterized in that** the reactive emulsifier is an oligomer based on polyethylene glycol with a molecule weight between 200 and 6000 g/mol and preferably between 200 and 2000 g/mol.

9. A composition according to claim 8,
**characterized in that** the chain ends of the emulsifier have been terminated with a bulky and/or hydrogen donating monofunctional alcohol.

10. A composition according to claim 7 or 8,
**characterized in that** the emulsifier exhibits at least one ethylenical unsaturation.

11. A composition according to any one of the preceding claims, **characterized in that** the co-monomer is an alkenyl ether having a mean functionality which is greater than 1 and less than 4.

12. A composition according to any one of the preceding claims, **characterized in that** the acid value in the polyester composition is less than 10 mg KOH/g and preferably less than or equal to 2 mg KOH/g.

13. A composition according to any one of the preceding claims, **characterized in that** the unsaturated groups in the unsaturated polyester consist of maleic and/or fumaric groups.

14. A composition according to any one of the preceding claims, **characterized in that** it exists in the form of a water emulsion.

15. A composition according to any one of the preceding claims, **characterized in that** it comprises oligomers of the bulky, terminal, monofunctional alcohol.

16. A lacquer or paint formulation, **characterized in that** it comprises a polyester composition according to any one of claims 1-15.

17. A lacquer or paint formulation according to claim 16, **characterized in that** it further comprises a photo-initiator.

## Patentansprüche

1. Photopolymerisierbare Polyester-Zusammensetzung, umfassend einen ethylenisch ungesättigten Polyester und ein Comonomer, **dadurch gekennzeichnet, dass** das Polymer eine relative Molekülmasse im Bereich von 300 g/mol bis 50000 g/mol hat, dass das Comonomer ein Alkenylether, ein Alkenylester, ein n-Alkenylamin oder ein n-Alkenylamid oder ein Gemisch aus zwei oder mehr dieser Monomerarten ist, dass der Polyester und/oder das Comonomer in mindestens einem raumgreifenden und/oder Wasserstoff abgebenden, einwertigen Alkohol endet, wobei ein raumgreifender Alkohol ein Alkohol mit Strukturelementen ist, die verzweigte aliphatische und/oder substituierte aromatische Gruppen besitzen, wobei die Strukturelemente an die OH-Gruppe des Alkohols gebunden sind, und dadurch, dass das Molverhältnis zwischen dem Grad der ungesättigtheit des ungesättigten Polyesters und dem Grad der Ungesättigtheit des Comonomers 0,7 bis 1,3, vorzugsweise 0,9 bis 1,1 beträgt.

2. Zusammensetzung nach Anspruch 1
**dadurch gekennzeichnet, dass** das Comonomer in einem Gemisch mit dem ungesättigten Polyester vorliegt.

3. Zusammensetzung nach Anspruch 1 oder 2,
**dadurch gekennzeichnet, dass** mindestens ein Teil des Comonomers chemisch in den ungesättigten Polyester eingebaut ist.

4. Zusammensetzung nach einem der Ansprüche 1 bis 3,
**dadurch gekennzeichnet, dass** die Funktionalität des ungesättigten Polyesters größer als 1 und vorzugsweise größer als 1,3 ist.

5. Zusammensetzung nach einem der vorhergehenden Ansprüche,
**dadurch gekennzeichnet, dass** die Funktionalität des Comonomers zwischen 1 und 4 liegt.

6. Zusammensetzung nach einem der vorhergehenden Ansprüche,
**dadurch gekennzeichnet, dass** der raumgreifende, Wasserstoff abgebende, einwertige Alkohol Benzylalkohol ist.

7. Zusammensetzung nach einem der vorhergehenden Ansprüche,
**dadurch gekennzeichnet, dass** sie zudem einen reaktiven Emulgator enthält.

8. Zusammensetzung nach Anspruch 7,
**dadurch gekennzeichnet, dass** der reaktive Emulgator ein Oligomer auf der Basis von Polyethylenglycol mit einer relativen Molekülmasse zwischen 200 und 6000 g/mol und vorzugsweise zwischen 200 und 2000 g/mol ist.

9. Zusammensetzung nach Anspruch 8,
**dadurch gekennzeichnet, dass** die Kettenenden des Emulgators endständig mit einem raumgreifenden und/oder Wasserstoff abgebenden einwertigen Alkohol versehen sind.

10. Zusammensetzung nach Anspruch 7 oder 8,
**dadurch gekennzeichnet, dass** der Emulgator mindestens eine ethylenische Ungesättigtheit aufweist.

11. Zusammensetzung nach einem der vorhergehenden Ansprüche,
**dadurch gekennzeichnet, dass** das Comonomer ein Alkenylether mit einer durchschnittlichen Funktionalität ist, die größer als 1 und kleiner als 4 ist.

12. Zusammensetzung nach einem der vorhergehenden Ansprüche,
**dadurch gekennzeichnet, dass** die Neutralisierungszahl der Polyester-Zusammensetzung kleiner als 10 mg KOH/g und vorzugsweise kleiner oder gleich 2 mg KOH/g ist.

13. Zusammensetzung nach einem der vorhergehenden Ansprüche,
**dadurch gekennzeichnet, dass** die ungesättigten Gruppen im ungesättigten Polyester aus Maleinsäure- und/oder Fumarsäuregruppen bestehen.

14. Zusammensetzung nach einem der vorhergehenden Ansprüche,
**dadurch gekennzeichnet, dass** sie in der Form einer Wasseremulsion vorliegt.

15. Zusammensetzung nach einem der vorhergehenden Ansprüche,
**dadurch gekennzeichnet, dass** sie Oligomere des raumgreifenden, endständigen, einwertigen Alkohols umfasst.

16. Lack- oder Anstrichfarbenformulierung,
**dadurch gekennzeichnet, dass** sie eine Polyester-Zusammensetzung nach einem der Ansprüche 1 bis 15 umfasst.

17. Lack- oder Anstrichfarbenformulierung nach Anspruch 16,
**dadurch gekennzeichnet, dass** sie zudem einen Photoinitiator umfasst.

## Revendications

1. Composition photo polymérisable de polyester comprenant un polyester à insaturation éthylénique et un comonomère, **caractérisé en ce que** le polyester a un poids moléculaire au sein de la plage de 300 g/mole à 50 000 g/mole, **en ce que** le comonomère est un éther alkényle, un ester alkényle, une aminé n-alkényle ou un amide n-alkényle ou un mélange de deux ou de plusieurs de ces types de monomères, **en ce que** le polyester et/ou le comonomère est(sont) terminé(s) par au moins un alcool encombrant et/ou un alcool mono fonctionnel, apportant de l'hydrogène, un alcool encombrant étant un alcool exhibant des éléments structuraux ayant des groupements aliphatiques et/ou aromatiques substitués ramifiés, où lesdits éléments structuraux sont liés au groupement OH de l'alcool, et **en ce que** le rapport molaire entre le degré d'insaturation du polyester insaturé et le degré d'insaturation du comonomère est de 0,7-1,3, de préférence de 0,9-1,1.

2. Composition selon la revendication 1, **caractérisé en ce que** le comonomère existe dans un mélange avec le polyester insaturé.

3. Composition selon la revendication 1 ou 2, **caractérisé en ce qu'**au moins une partie du comonomère est incorporée par voie chimique dans le polyester insaturé.

4. Composition selon l'une quelconque des revendications 1-3, **caractérisé en ce que** la fonctionnalité du polyester insaturé est supérieure à 1, de préférence supérieure à 1,3.

5. Composition selon l'une quelconque des revendications précédentes, **caractérisé en ce que** la fonctionnalité du comonomère est comprise entre 1 et 4.

6. Composition selon l'une quelconque des revendications précédentes, **caractérisé en ce que** l'alcool mono fonctionnel, encombrant, apportant de l'hydrogène est l'alcool benzylique.

7. Composition selon l'une quelconque des revendications précédentes, **caractérisé en ce qu'**il contient en outre un émulsifiant réactif.

8. Composition selon la revendication 7, **caractérisé en ce que** l'émulsifiant réactif est un oligomère basé sur un polyéthylèneglycol ayant un poids moléculaire compris entre 200 et 6 000 g/mole et, de préférence, entre 200 et 2 000 g/mole.

9. Composition selon la revendication 8, **caractérisé en ce que** les extrémités de chaîne de l'émulsifiant ont été terminées par un alcool mono fonctionnel encombrant et/ou apportant de l'hydrogène.

10. Composition selon la revendication 7 ou 8, **caractérisé en ce que** l'émulsifiant manifeste au moins une insaturation éthylénique.

11. Composition selon l'une quelconque des revendications précédentes, **caractérisé en ce que** le comonomère est un éther alkényle ayant une fonctionnalité moyenne qui est supérieure ou égale à 1.

12. Composition selon l'une quelconque des revendications précédentes, **caractérisé en ce que** l'indice d'acidité dans la composition de polyester est inférieur à 10 mg de KOH/g et, de préférence, inférieur ou égal à 2 mg de KOH/g.

13. Composition selon l'une quelconque des revendications précédentes, **caractérisé en ce que** les groupements insaturés dans le polyester insaturé se composent de groupements maléiques et/ou fumariques.

14. Composition selon l'une quelconque des revendications précédentes, **caractérisé en ce qu'**elle existe sous la forme d'une émulsion aqueuse.

15. Composition selon l'une quelconque des revendications précédentes, **caractérisé en ce qu'**elle comprend des oligomère de l'alcool mono fonctionnel encombrant, en fin de chaîne.

16. Formulation de laque ou de peinture, **caractérisé en ce qu'**elle comprend une composition de polyester selon l'une quelconque des revendications 1-15.

17. Formulation de laque ou de peinture, selon la revendication 16, **caractérisé en ce qu'**elle comprend en outre un agent de photo initiation.
